# EUROPÄISCHE PATENTSCHRIFT

(11) **EP 3 628 788 B1**
(45) Veröffentlichungstag und Bekanntmachung des Hinweises auf die Patenterteilung: **07.06.2023**
(21) Anmeldenummer: 19199973.9
(22) Anmeldetag: 26.09.2019
(51) Int. Cl.: E04B 1/66, G01M 3/16

(54) **FLÜSSIGKEITSDICHTER SCHICHTAUFBAU UND VERFAHREN ZUR HERSTELLUNG DESSELBEN**
LIQUID-TIGHT LAYER STRUCTURE AND METHOD FOR PRODUCING THE SAME
STRUCTURE EN COUCHES ÉTANCHE AUX FLUIDES ET PROCÉDÉ DE FABRICATION D'UNE TELLE STRUCTURE

(30) Priorität: 27.09.2018 DE 102018123902
(43) Veröffentlichungstag der Anmeldung: 01.04.2020
(73) Patentinhaber: Sopro Bauchemie GmbH, 65203 Wiesbaden (DE)
(72) Erfinder: ROSENAU, Björn, 65232 Taunusstein (DE)
(74) Vertreter: Diehl & Partner

(56) Entgegenhaltungen:
- EP-A2- 0 228 004
- DE-A1- 19 724 296
- DE-A1-102010 040 978

## Beschreibung

Die vorliegende Erfindung betrifft einen flüssigkeitsdichten Schichtaufbau für Flächen (Boden- und/oder Wand- und/oder Deckenflächen) von Bauten, die mit Flüssigkeiten belastet werden können. Weiter betrifft die vorliegende Erfindung ein Verfahren zur Herstellung des flüssigkeitsdichten Schichtaufbaus. Offenbart aber nicht beansprucht wird weiter ein Verfahren zur Überprüfung des flüssigkeitsdichten Schichtaufbaus auf Dichtheit.

Flüssigkeitsdichte Schichtaufbauten werden beispielsweise im Schwimmbadbau oder Anlagenbau verwendet, um bauseits großvolumige Behältnisse für Flüssigkeiten und Flächenabdichtungen vorzusehen. Bei der Flüssigkeiten kann es sich beispielsweise um Wasser handeln.

Bei flüssigkeitsdichten Schichtaufbauten ist es wichtig, dass selbst kleinste Fehlstellen bereits bei der Herstellung erkannt werden können. Da sich insbesondere bei nicht abgeschlossenen Behältnissen und Flächenabdichtungen kleinere Undichtheiten erst relativ spät erkennen lassen, besteht anderenfalls die Gefahr einer mittelfristigen Beschädigung des Baus, in welchem der flüssigkeitsdichte Schichtaufbau verwendet wird.

Flüssigkeitsdichte Schichtaufbauten mit den Merkmalen des Oberbegriffs von Anspruch 1 sind aus den Dokumenten DE 197 24 296 A1 und DE 10 2010 040 978 A1 bekannt.

Dokument DE 11 45 337 A offenbart, zur Überprüfung einer Abdichtung von Bauwerksteilen gegen Wasser zwischen einer Dichtungsschicht aus Kunststoff oder Bitumen und dem Bauwerk eine Gegenelektrode in Form einer vollflächigen Metalleinlage - wie beispielsweise einer Aluminiumfolie - vorzusehen. Die Metalleinlage wird geerdet, um nach Fertigstellung der Abdichtung eine Gegenelektrode für eine Suchelektrode zu bilden, mit der die Dichtungsschicht auf Fehlstellen, welche Funkenschlag bewirken, abgetastet wird.

An dieser Lösung ist nachteilig, dass eine vollflächige Metalleinlage schwierig herzustellen ist, da die Metalleinlage eigens mit dem abzudichtenden Bauwerksteil verklebt werden muss. Zudem sind die Kosten für die Bereitstellung der Metalleinlage hoch. Weiter sind nicht alle Dichtungsstoffe mit einer derartigen Metalleinlage kombinierbar, da nur manche Stoffe ausreichend fest an Metall haften. Schließlich besteht die Gefahr, dass die vollflächige Metalleinlage mit der Zeit korrodiert, was die Haltbarkeit der Abdichtung insgesamt gefährdet.

Zur Lösung dieses Problems ist aus dem Dokument DE 24 46 979 A1 eine auf Dichtheit prüfbare Abdichtung von Bauwerksteilen gegen Wasser bekannt, bei welcher die vollflächige Metalleinlage durch eine vollflächige, nicht-metallische leitfähige Schicht in Form eines Voranstrichs ersetzt ist. Dabei stellt der Voranstrich gleichzeitig die für eine Prüfung erforderliche Gegenelektrode zwischen der Dichtungsschicht und der diese Schicht tragenden Bauwerksfläche und die Verbindung zwischen Bauwerksfläche und Dichtungsschicht dar. Für den Voranstrich wird ein Bindemittel aus Kunststoff oder Bitumen und damit ein ähnliches Material verwendet, wie es üblicherweise für Dichtungsschichten verwendet wird. Somit weist der Voranstrich ebenso wie die eigentliche Dichtungsschicht abdichtende Eigenschaften auf. Der Voranstrich wird im Spritz- oder Streichverfahren aufgebracht.

Die Verwendung von Kunststoff und Bitumen für den Voranstrich (und die Dichtungsschicht) bei der vorbekannten Lösung wirft bei einem Abriss des Bauwerks Probleme hinsichtlich der Entsorgung auf. Zudem ist die Handhabung nicht unproblematisch.

Es ist daher Aufgabe der vorliegenden Erfindung, einen flüssigkeitsdichten Schichtaufbau bereitzustellen, welcher einfach und kostengünstig hergestellt und zuverlässig auf Dichtheit geprüft werden kann, und geringere Probleme bei der Entsorgung verursacht.

Die vorstehende Aufgabe wird durch die Kombination der Merkmale der unabhängigen Ansprüche gelöst. Bevorzugte Weiterbildungen finden sich in den Unteransprüchen.

Ausführungsformen eines flüssigkeitsdichten Schichtaufbaus für Flächen von Bauten (im Folgenden auch als "Bauwerksflächen" bezeichnet) weisen eine erste und eine zweite Schicht auf. Die erste (insbesondere vollflächige) Schicht ist auf Basis von Zement gebildet und weist einen gemäß DIN EN 61340-4-1 VDE 0300-4-1:2016-04 gemessenen Oberflächenwiderstand kleiner gleich 10⁵ Ω oder kleiner gleich 5 × 10⁴ Ω auf. In der Folge ist die Leitfähigkeit der ersten Schicht gegenüber Zement deutlich erhöht und ist die erste Schicht insgesamt als leitfähig zu beurteilen. Die zweite (insbesondere vollflächige) Schicht ist auf Basis von Zement gebildet und weist einen gemäß DIN EN 61340-4-1 VDE 0300-4-1:2016-04 gemessenen Durchgangswiderstand von größer gleich 10⁸ Ω oder größer gleich 10⁹ Ω auf. In der Folge ist die zweite Schicht als nicht leitfähig zu beurteilen und weist eine Leitfähigkeit auf, die im Bereich der Leitfähigkeit von trockenem ausgehärtetem Zement liegt. Weiter weist die zweite Schicht eine gemäß DIN 18534-1 - 2017-07 bestimmte Wassereinwirkungsklasse von W1-I bis W3-I auf. Somit ist die zweite Schicht dauerhaft dicht gegenüber Wasser mit einer Füllhöhe kleiner oder gleich 5 Meter. Die erste Schicht ist zwischen der zweiten Schicht und einer die erste Schicht tragenden abzudichtenden Fläche angeordnet.

Es können sich somit folgende Widerstände der ersten und zweiten Schicht gegenüber stehen:
Oberflächenwiderstand der ersten Schicht ist kleiner gleich 10⁵ Ω und Durchgangswiderstand der zweiten Schicht ist größer gleich 10⁸ Ω.
Oberflächenwiderstand der ersten Schicht ist kleiner gleich 10⁵ Ω und Durchgangswiderstand der zweiten Schicht ist größer gleich 10⁹ Ω.
Oberflächenwiderstand der ersten Schicht ist kleiner gleich 5 × 10⁴ Ω und Durchgangswiderstand der zweiten Schicht ist größer gleich 10⁸ Ω.
Oberflächenwiderstand der ersten Schicht ist kleiner gleich 5 × 10⁴ Ω und Durchgangswiderstand der zweiten Schicht ist größer gleich 10⁹ Ω.

Indem die zweite Schicht, welche die Dichtwirkung des Schichtaufbaus bereitstellt, einen gegenüber einer darunterliegenden ersten Schicht um wenigstens drei Größenordnungen oder wenigstens vier Größenordnungen oder wenigstens fünf Größenordnungen oder wenigstens sieben Größenordnungen verringerte Leitfähigkeit aufweist, ist es möglich, die Dichtheit der zweiten Schicht dadurch zu überprüfen, dass die zweite Schicht als Isolator für eine gegenüber der ersten Schicht angelegten Hochspannung verwendet wird. Tritt in Abschnitten der zweiten Schicht trotzdem ein Stromfluss auf, der über einem Schwellenwert liegt, so ist die Dichtheit der zweiten Schicht in diesem Abschnitt ungenügend und erfüllt dort nicht die für die Wassereinwirkungsklasse geforderten Anforderungen.

Da das Aufbringen einer ersten Schicht auf Basis von Zement zum Untergrundausgleich (insbesondere zum Schließen von Poren und Lunkern) bei der Erstellung von Abdichtungen üblich ist, erfordert der erfindungsgemäße Schichtaufbau - anders als die aus dem Stand der Technik vorbekannten Schichtaufbauten - keinen zusätzlichen Arbeitsschritt, sondern lediglich die Erhöhung der Leitfähigkeit der ersten Schicht, was durch Zusatzstoffe erfolgen kann.

Da die erste Schicht auf Basis von Zement ausgeführt ist, kann Sie bei einem Abriss zusammen mit der üblicherweise ebenfalls aus Zement gebildeten Bauwerksfläche entsorgt werden. Die Entsorgung von Abfällen auf Basis von Zement ist vergleichsweise unproblematisch. Zudem kann die Erstellung der ersten Schicht durch mit in der Handhabung von Baustoffen auf Basis von Zement vertrauten Personen erfolgen; dies ist bei Schichten auf Basis von Bitumen oder Kunststoff nicht ohne weiteres der Fall. Schließlich weisen die für die zweite Schicht üblicherweise verwendeten Materialen in der Regel eine gute Haftung auf einer Schicht auf Basis von Zement auf.

Die Verwendung einer durch eine elektrisch isolierende Dichtschicht (zweite Schicht) vollflächig verdeckten elektrisch leitfähigen (ersten) Schicht auf Basis von Zement als Gegenelektrode eines elektrisch auf seine Dichtheit prüfbaren flüssigkeitsdichten Schichtaufbaus ist äußerst ungewöhnlich, da leitfähige zementöse Schichten herkömmlicherweise zum Ableiten von elektrostatischen Aufladungen verwendet werden. Zu dieser herkömmlichen Verwendung steht die nun beanspruchte elektrische Isolierung der ersten Schicht gegenüber der Umgebung im Widerspruch.

In diesem Dokument bedeutet "auf der Basis von Zement" im Hinblick auf eine Schicht, dass hydraulisches Bindemittel, insbesondere Zement und insbesondere Portlandzement innerhalb der Schicht als dominierendes Bindemittel dient.

Gemäß einer Ausführungsform wird der Oberflächenwiderstand und/oder Durchgangswiderstand in ausgehärtetem Zustand der jeweiligen Schicht gemessen. Dies bedeutet, dass die Schicht gemäß Verarbeitungsanweisung des jeweiligen Materials erstellt worden ist und eine gemäß Verarbeitungsanweisung des jeweiligen Materials bis zur vollen Belastbarkeit der Schicht erforderliche Zeitspanne bei einer gemäß Verarbeitungsanweisung erforderlichen Temperatur und Luftfeuchtigkeit verstrichen ist.

Gemäß einer Ausführungsform wird der Oberflächenwiderstand und/oder Durchgangswiderstand nach einer Trocknungszeit bei 23°C und 50 % relativer Luftfeuchtigkeit von 2 Tagen oder 3 Tagen oder 4 Tagen oder 5 Tagen oder 6 Tagen oder 7 Tagen oder mehr als 7 Tagen gemessen.

Gemäß einer Ausführungsform enthält die erste Schicht 0 Masse% bis unter 50 Masse% Füllstoffe (insbesondere silikatische und/oder calcitische Füllstoffe), 0 Masse% bis unter 50 Masse% Portland Zement, 2,5 Masse% bis 6 Masse% und insbesondere 3 Masse% bis 4,5 Masse% Graphitpulver, Ruß oder Metallpulver und bis 5 Masse% Hilfsstoffe. Die Hilfsstoffe können beispielsweise dazu dienen, die Haltbarkeit des zur Bildung der ersten Schicht verwendeten Materials zu erhöhen. Gemäß einer Ausführungsform enthalten die Hilfsstoffe bis unter 2,5 Masse% Calciumdiformiat (die Masse% sind nicht auf den Anteil an Hilfsstoffen, sondern auf die Gesamtmasse der ersten Schicht bezogen).

Gemäß einer Ausführungsform wird die erste Schicht gebildet, indem 25 Kilogramm eines unter der Handelsbezeichnung "*Sopro's No.1 Flexkleber* - *No.1 400"* vertriebenen Flexmörtels zusammen mit 3,75 Kilogramm einer unter der Handelsbezeichnung *"Sopro ELD 458 Electra Leitdispersion"* vertriebenen Flüssigdispersion verarbeitet werden, um einen elektrisch leitfähigen hydraulisch härtenden Mörteln zu erhalten.

Sämtliche genannten Produkte sind bei der Sopro Bauchemie GmbH, Postfach 42 01 52, 65102 Wiesbaden erhältlich.

Gemäß einer Ausführungsform weist die erste Schicht dann eine Dicke von zwischen 0,5 Millimeter und 20 Millimeter oder von zwischen 1 Millimeter und 20 Millimeter oder von zwischen 1 Millimeter und 5 Millimeter oder von zwischen 1,5 Millimeter und 2,5 Millimeter auf.

Die zweite Schicht auf Basis von Zement enthält gemäß einer Ausführungsform 10 Masse% bis unter 30 Masse% organische nichtreaktive Füllstoffe (dabei kann es sich beispielsweise um Gummimehl handeln), bis unter 10 Masse% Füllstoffe (insbesondere silikatische und/oder calcitische Füllstoffe), 5 Masse% bis unter 50 Masse% hydraulische Bindemittel, bis unter 55 Masse% Acrylatpolymer und bis unter 3 Masse% Hilfsstoffe. Weiter beträgt eine Dicke der zweiten Schicht dann zwischen 2,0 Millimeter und 5,0 Millimeter oder zwischen 2,5 Millimeter und 4,0 Millimeter.

Es ist besonders vorteilhaft, dass sowohl die erste als auch die zweite Schicht auf Basis von Zement gebildet sind, da dann durch einen Anwender nur Materialien mit ähnlichen Verarbeitungseigenschaften verarbeitet werden müssen. Zudem ist die Verarbeitung zementärer Schichten im Bau weit verbreitet, so dass die meisten Benutzer damit vertraut sind. Weiter ist der resultierende Schichtaufbau aufgrund der Ähnlichkeit der in den ersten und zweiten Schichten verwendeten Materialien im Falle einer späteren Entsorgung leicht zu handhaben da die Schichten gemeinsam entsorgt werden können.

Die zweite Schicht auf Basis von Zement kann beispielsweise unter Verwendung des unter der Handelsbezeichnung "*Sopro TDS 823 TuboDichtSchlämme 2-K"* erhältlichen Produkts gebildet sein.

Gemäß einer Ausführungsform weist der flüssigkeitsdichte Schichtaufbau weiter eine Mehrzahl elektrischer Leitungsbänder auf. Dabei können die Leitungsbänder unterhalb der ersten Schicht angeordnet sein, oder teilweise oder vollständig in die erste Schicht eingebettet sein, oder zwischen der ersten Schicht und der zweiten Schicht angeordnet sein. Erforderlich ist, dass die Leitungsbänder flächig mit der ersten Schicht in Verbindung stehen. Da die erste Schicht elektrisch leitfähig ist, stehen die Leitungsbänder somit mit der ersten Schicht elektrisch in Verbindung.

Gemäß einer Ausführungsform können die elektrischen Leitungsbänder aus Metallfolie oder aus Kupferfolie oder aus einseitig selbstklebender Kupferfolie gebildet sein. Gemäß einer Ausführungsform können die elektrischen Leitungsbänder eine Dicke von zwischen 20 µm und 50 µm und eine Breite von zwischen einem Zentimeter und fünf Zentimetern aufweisen.

Gemäß einer Ausführungsform können die elektrischen Leitungsbänder ein Streifenmuster mit einem Streifenabstand von kleiner 15 Meter oder von kleiner 10 Meter oder von kleiner 5 Meter bilden. Gemäß einer alternativen Ausführungsform können die elektrischen Leitungsbänder ein Netz mit einer Maschenweite von kleiner 15 Meter oder von kleiner 10 Meter oder von kleiner 5 Meter oder mit einer Maschenweite von 5 Meter oder mit einer Maschenweite von 10 Meter bilden.

Bei einem derartige Abstand der elektrischen Leitungsbänder zueinander ist in Abhängigkeit der Leitfähigkeit der ersten Schicht sichergestellt, dass jeder Bereich der ersten Schicht elektrisch mit den elektrischen Leitungsbändern verbunden ist, ohne dass dabei ein zu großer Widerstand überwunden werden muss.

Gemäß einer Ausführungsform sind alle oder einzelne der elektrischen Leitungsbänder geerdet.

Ausführungsformen eines Verfahrens zur Herstellung eines flüssigkeitsdichten Schichtaufbaus weisen die Schritte eines Bereitstellen einer Trägerschicht, eines Aufkleben eines Netzes von elektrischen Leitungsbändern mit eine Maschenweite von kleiner 15 Metern, eines flächigen Aufbringens einer ersten Schicht auf Basis von Zement auf die Trägerschicht und die aufgeklebten Leitungsbänder, wobei der Oberflächenwiderstand der ersten Schicht gemäß DIN EN 61340-4-1 VDE 0300-4-1:2016-04 kleiner gleich 10⁵ Ω ist, und die Schichtdicke der ersten Schicht zwischen 0,5 Millimeter und 20 Millimeter beträgt sowie eines flächigen Aufbringens einer zweiten Schicht auf Basis von Zement auf die erste Schicht auf, wobei der Durchgangswiderstand gemäß DIN EN 61340-4-1 VDE 0300-4-1:2016-04 der zweiten Schicht größer gleich 10⁸ Ω ist und die Wassereinwirkungsklasse gemäß DIN 18534-1 - 2017-07 der zweiten Schicht W1-I bis W3-I ist.

Dabei kann es sich bei der Trägerschicht um eine Boden- und/oder Wand- und/oder Deckenfläche eines Bauwerks handeln. Gemäß einer Ausführungsform ist die Trägerschicht ausgeglichen, und weist somit keine Unebenheiten größer 20 Millimeter oder größer 10 Millimeter oder größer 5 Millimeter auf. Die Trägerschicht muss tragfähig und somit dazu ausgebildet sein, die auf Basis von Zement gebildete erste Schicht zu tragen. Gemäß einer Ausführungsform wird die Trägerschicht von Beton, Estrich, Keramik, Stein, Bauplatten, Gipskarton, Mauerwerk, Putz, Ausgleichspachtungen oder Hartschaum gebildet.

Gemäß einer Ausführungsform weist das Verfahren weiter ein Erden der elektrischen Leitungsbänder auf.

Das vorstehende Verfahren ist gut zum Bilden des vorstehend beschriebenen flüssigkeitsdichten Schichtaufbaus geeignet.

Ausführungsformen eines Verfahrens zur Überprüfung des vorstehend beschriebenen flüssigkeitsdichten Schichtaufbaus auf Dichtigkeit weisen die Schritte eines Bereitstellen des vorstehend beschriebenen flüssigkeitsdichten Schichtaufbaus, eines Anlegens einer Prüfspannung von zwischen 5kV und 10kV zwischen die erste Schicht und eine Messbürste, eines Abfahrens der Oberfläche der zweiten Schicht mit der Messbürste mit einer Geschwindigkeit von weniger als 50 cm pro Sekunde oder mit einer Geschwindigkeit von weniger als 40 cm pro Sekunde und Überwachung eines Stromflusses und eines Erkennens einer mangelnden Dichtheit an Stellen, an denen ein Stromfluss zwischen der Messbürste und der ersten Schicht detektiert wird, auf.

Gemäß einer Ausführungsform wird eine mangelnde Dichtheit nur dann erkannt, wenn es zwischen der Messbürste und der ersten Schicht zu einer elektrischen Entladung kommt.

Ausführungsformen der Erfindung werden nachfolgend anhand von Figuren näher erläutert. Hierbei zeigt:
- Figur 1: schematisch in perspektivischer Ansicht einen Schichtaufbau gemäß einer Ausführungsform; und
- Figur 2: schematisch eine Überprüfung eines Schichtaufbaus gemäß einer Ausführungsform auf Undichtheit.

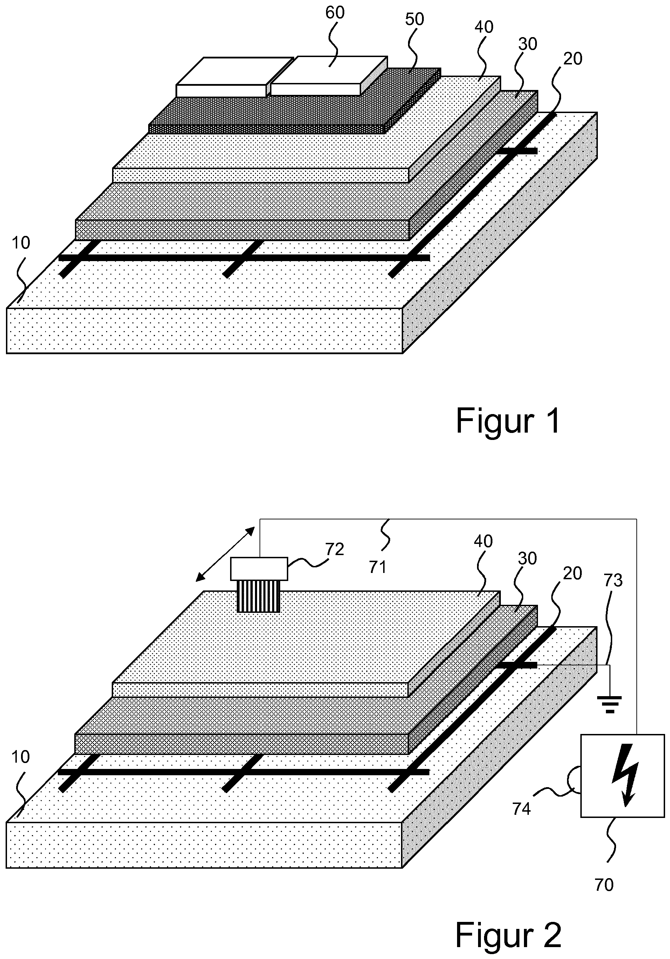

Im Folgenden werden unter Bezugnahme auf Figur 1 ein Schichtaufbau und ein Verfahren zur Herstellung desselben gemäß einer Ausführungsform erläutert.

In Figur 1 bezeichnet das Bezugszeichen 10 einen Abschnitt einer Trägerschicht aus (getrocknetem) Beton, welche einen Boden eines Schwimmbads (nicht gezeigt) und damit eine abzudichtende Fläche bildet.

Auf die Trägerschicht 10 ist ein Netz 20 von selbstklebenden Leitungsbändern mit einer Maschenweite von fünf Metern aufgeklebt. Die einzelnen Leitungsbänder sind aus Kupferfolie mit einer Dicke von 35 µm und einer Breite von 2 Zentimetern gebildet. Das Netz 20 ist an eine nicht gezeigte Erdung angeschlossen.

Über dem Netz 20 ist eine 2 Millimeter starke vollflächige erste leitfähige Schicht 30 angeordnet, die gebildet wird, indem 25 Kilogramm des Produkts "*Sopro's No.1 Flexkleber* - *No.1 400"* zusammen mit 3,75 Kilogramm des Produkts "*Sopro ELD 458 Electra Leitdispersion"* verarbeitet werden. Somit ist das Netz 20 teilweise in die erste leitfähige Schicht 30 eingebettet und steht mit dieser flächig in elektrischem Kontakt. Der gemäß DIN EN 61340-4-1 VDE 0300-4-1:2016-04 bestimmte Oberflächenwiderstand der ersten Schicht 30 beträgt nach einer Trocknungszeit von sieben Tagen bei 23°C und 50 % relativer Luftfeuchtigkeit (und damit nach dem Aushärten der ersten Schicht 30) 10⁴ Ω. Somit weist die erste Schicht 30 eine gegenüber Zement und auch gegenüber der Trägerschicht 10 deutlich erhöhte Leitfähigkeit auf.

Auf diese erste Schicht 30 ist eine vollflächige zweite wasserdichte und nichtleitende Schicht 40 mit einer Schichtdicke von 3 Millimeter angeordnet. Diese wird in der gezeigten Ausführungsform durch Aufbringen des Produkts "*Sopro TDS 823 TuboDichtSchlämme 2-K"* in drei Arbeitsgängen gebildet. Die zweite Schicht weist nach einer Trocknungszeit von drei Tagen bei 23°C und 50 % relativer Luftfeuchtigkeit und damit nach dem Aushärten einen gemäß DIN EN 61340-4-1 VDE 0300-4-1:2016-04 gemessenen Durchgangswiderstand von 10⁸ Ω auf. Aufgrund der Eigenschaften des Produkts "*Sopro TDS 823 TuboDichtSchlämme 2-K"* weist die zweite Schicht eine gemäß DIN 18534-1 - 2017-07 bestimmte Wassereinwirkungsklasse von W3-I auf.

Die zweiten Schicht 40 trägt über eine 2 Millimeter starke Schicht herkömmlichen Fliesenklebers 50 (für den wieder das Produkt "*Sopro's No.1 Flexkleber* - *No.1 400"* verwendet wurde) keramische Fliesen 60. Diese sind in Figur 1 noch nicht verfugt und bilden die Nutzschicht des Schichtaufbaus. Insbesondere schützen die Fliesen die zweite wasserdichte Schicht 40 vor einer mechanischen Beschädigung. Die vorstehend beschriebene Schicht aus Fliesenkleber ist nur optional und kann in ihrer Dicke zwischen 1 Millimeter und 20 Millimeter variieren.

Ersichtlich sind die Maschenweite des Netzes 20 und die Dicke der Schichten 30, 40 und 50 in Figur 1 nicht maßstabsgetreu wiedergegeben.

Am Beispiel von Figur 1 wurde ein Schichtaufbau beschrieben, der - mit Ausnahme des Netzes 20 und der keramischen Fliesen 60 - nur auf Schichten auf Basis von Zement aufbaut, bei denen Zement somit als Bindemittel dient.

Im Folgenden wird unter Bezugnahme auf Figur 2 ein Verfahren zur Überprüfung des Schichtaufbaus aus Figur 1 beschrieben. Wie sich aus einem Vergleich der Figuren 1 und 2 ergibt, wird dieses Verfahren nach dem Aushärten und Trocknen der zweiten Schicht 40 durchgeführt, und somit bevor die zweite Schicht 40 mittels Fliesenkleber 50 und Fliesen 60 abgedeckt wird.

Zur Durchführung des Verfahrens wird ein Hochspannungs-Prüfgerät 70 über elektrischen Leitungen 71, 72 mit einer Prüfelektrode 72 in Form einer Messbürste verbunden. Das Netz 20 wird dauerhaft geerdet.

Das Hochspannungs-Prüfgerät 70 ist dazu ausgebildet, zwischen dem Netz 20 und der Prüfelektrode 72 eine Hochspannung von bis zu 8kV anzulegen, dabei aber einen möglichen Stromfluss auf ein für Menschen ungefährliches Maß zu begrenzen. Ein entsprechendes Gerät kann unter der Bezeichnung ELMED Isotest Inspect 8.0 von der Firma ELMED Dr. Ing. Mense GmbH, Weilenburgstraße 39, D-42579 Heiligenhaus bezogen werden.

Während die Hochspannung anliegt wird die Oberfläche der zweiten wasserdichten Schicht 40 von einem Benutzer mittels der einen Messingbesen aufweisenden Prüfelektrode 72 mit einer Geschwindigkeit von rund 30 Zentimeter pro Sekunde abgefahren. Sobald das Hochspannungs-Prüfgerät 70 eine elektrische Entladung zwischen der Prüfelektrode 72 und dem Netz 20 detektiert, wird dies über eine Anzeige 74 sowie optisch und akustisch signalisiert. In der Folge erkennt der Benutzer, dass die zweite Schicht 40 an der Stelle, an der sich der Messingbesen der Prüfelektrode 72 zum Zeitpunkt des Signals befunden hat, eine mangelhafte Dichtigkeit aufweist. Diese Schwachstelle der zweiten Schicht 40 kann dann durch Erhöhung der Dicke der zweiten Schicht 401 in diesem Bereich behoben werden. Die vorstehende Prüfung auf Dichtheit kann gemäß DIN 55670:2011-02 erfolgen.

Erst wenn die zweite Schicht 40 insgesamt mit positivem Ergebnis auf ihre Dichtheit geprüft worden ist, erfolgt die in Figur 1 gezeigte Abdeckung der zweiten Schicht 40 mit Fliesenkleber 50 und Fliesen 60.

### Bezugszeichenliste

- 10: Trägerschicht
- 20: Netz aus elektrischen Leitungsbändern
- 30: erste (elektrisch leitende) Schicht
- 40: zweite (elektrisch nicht leitende und wasserdichte) Schicht
- 50: Fliesenkleber
- 60: Fliese
- 70: Hochspannungs-Prüfgerät
- 71: elektrische Leitung
- 72: Prüfelektrode
- 73: elektrische Leitung
- 74: Anzeige

## Patentansprüche

1. Flüssigkeitsdichter Schichtaufbau für Flächen von Bauten, aufweisend:
eine erste leitfähige Schicht (30), und
eine zweite nicht leitfähige Schicht (40),
wobei die erste Schicht (30) im eingebauten Zustand zwischen einer abzudichtenden Fläche (10) und der zweiten Schicht (40) angeordnet ist,
**dadurch gekennzeichnet, dass**
ein Oberflächenwiderstand der ersten Schicht (30) gemäß DIN EN 61340-4-1 VDE 0300-4-1:2016-04 kleiner gleich 10⁵ Ω oder kleiner gleich 5 × 10⁴ Ω ist,
ein Durchgangswiderstand der zweiten Schicht (40) gemäß DIN EN 61340-4-1 VDE 0300-4-1:2016-04 größer gleich 10⁸ Ω oder größer gleich 10⁹ Ω ist und deren Wassereinwirkungsklasse gemäß DIN 18534-1 - 2017-07 W1-I bis W3-I ist, und sowohl die erste Schicht (30) als auch die zweite Schicht (40) auf Basis von Zement gebildet sind.

2. Flüssigkeitsdichter Schichtaufbau nach Anspruch 1, wobei die erste Schicht (30) enthält:
bis unter 50 Masse% Füllstoffe;
bis unter 50 Masse% Portland Zement;
2,5 Masse% bis 6 Masse% Graphitpulver, Ruß oder Metallpulver; und bis 5 Masse% Hilfsstoffe.

3. Flüssigkeitsdichter Schichtaufbau nach Anspruch 2, wobei die Dicke der ersten Schicht (30)
zwischen 0,5 Millimeter und 20 Millimeter oder
zwischen 1 Millimeter und 5 Millimeter oder
zwischen 1,5 Millimeter und 2,5 Millimeter beträgt.

4. Flüssigkeitsdichter Schichtaufbau nach einem der Ansprüche 1 bis 3,
wobei die zweite Schicht (40) enthält:
10 Masse% bis unter 30 Masse% organische nichtreaktive Füllstoffe;
bis unter 10 Masse% Füllstoffe;
5 Masse% bis unter 50 Masse% hydraulische Bindemittel;
bis unter 55 Masse% Acrylatpolymer; und
bis unter 3 Masse% Hilfsstoffe; und
wobei die Dicke der zweiten Schicht (40) zwischen 2,0 Millimeter und 5,0 Millimeter oder zwischen 2,5 Millimeter und 4,0 Millimeter beträgt.

5. Flüssigkeitsdichter Schichtaufbau nach einem der Ansprüche 1 bis 4, weiter aufweisend eine Mehrzahl elektrischer Leitungsbänder (20), die flächig mit der ersten Schicht (30) in Kontakt stehen,
wobei die Leitungsbänder (20) unterhalb der ersten Schicht (30) angeordnet sind; oder
wobei die Leitungsbänder (20) in die erste Schicht (30) eingebettet sind; oder wobei die Leitungsbänder (20) zwischen der ersten Schicht (30) und der zweiten Schicht (40) angeordnet sind.

6. Flüssigkeitsdichter Schichtaufbau nach Anspruch 5, wobei die elektrischen Leitungsbänder (20) aus Metallfolie oder aus Kupferfolie oder aus einseitig selbstklebender Kupferfolie gebildet sind.

7. Flüssigkeitsdichter Schichtaufbau nach Anspruch 5 oder 6, wobei die elektrischen Leitungsbänder (20)
ein Streifenmuster mit einem Streifenabstand von kleiner 15 Meter oder von kleiner 10 Meter oder von kleiner 5 Meter oder
ein Netz mit einer Maschenweite von kleiner 15 Meter oder von kleiner 10 Meter oder von kleiner 5 Meter oder mit einer Maschenweite von 5 Meter oder mit einer Maschenweite von 10 Meter bilden.

8. Flüssigkeitsdichter Schichtaufbau nach Anspruch 5, 6 oder 7, wobei die elektrischen Leitungsbänder (20) geerdet sind.

9. Verfahren zur Herstellung eines flüssigkeitsdichten Schichtaufbaus nach einem der Ansprüche 5 bis 8, aufweisend die folgenden Schritte:
Bereitstellen einer Trägerschicht (10);
Aufkleben eines Netzes von elektrischen Leitungsbändern (20) mit einer Maschenweite von kleiner 15 Metern;
flächiges Aufbringen einer ersten Schicht (30) auf Basis von Zement auf die Trägerschicht und die aufgeklebten Leitungsbänder, wobei der Oberflächenwiderstand der ersten Schicht gemäß DIN EN 61340-4-1 VDE 0300-4-1:2016-04 kleiner gleich 10⁵ Ω ist, und die Schichtdicke der ersten Schicht (30) zwischen 0,5 Millimeter und 20 Millimeter beträgt;
flächiges Aufbringen einer zweiten Schicht (40) auf Basis von Zement auf die erste Schicht, wobei der Durchgangswiderstand gemäß DIN EN 61340-4-1 VDE 0300-4-1:2016-04 der zweiten Schicht (40) größer gleich 10⁸ Ω ist und die Wassereinwirkungsklasse gemäß DIN 18534-1 - 2017-07 der zweiten Schicht W1-I bis W3-I ist.

10. Verfahren nach Anspruch 9, weiter aufweisend:
Erden der elektrischen Leitungsbänder (20).

## Claims

1. A liquid-tight layer assembly for surfaces of constructions, comprising:
a first conductive layer (30), and
a second non-conductive layer (40),
wherein the first layer (30) in the assembled state is disposed between a surface (10) to be tightened and the second layer (40),
**characterised in that**
a surface resistance of the first layer (30) according to DIN EN 61340-4-1 VDE 0300-4-1:2016-04 is less than or equal to 10⁵ Ω or less than or equal to 5 × 10⁴ Ω,
a volume resistance of the second layer (40) according to DIN EN 61340-4-1 VDE 0300-4-1:2016-04 is greater than or equal to 10⁸ Ω or greater than or equal to 10⁹ Ω, and a water impact class of which according to DIN 18534-1 - 2017-07 is W1-I to W3-I, and
both the first layer (30) and the second layer (40) are formed on the basis of cement.

2. The liquid-tight layer assembly according to claim 1, wherein the first layer (30) contains:
up to less than 50 mass% of fillers;
up to less than 50 mass% Portland cement;
2.5 mass% to 6 mass% graphite powder, carbon black or metal powder; and up to 5 mass% of additives.

3. The liquid-tight layer assembly of claim 2, wherein the thickness of the first layer (30) is
between 0.5 millimetres and 20 millimetres or
between 1 millimetre and 5 millimetres or
between 1.5 millimetres and 2.5 millimetres.

4. The liquid-tight layer assembly according to any one of claims 1 to 3,
wherein the second layer (40) comprises:
10 mass% to less than 30 mass% organic non-reactive fillers;
up to less than 10 mass% fillers;
5 mass% to less than 50 mass% hydraulic binders;
up to less than 55 mass% of acrylate polymer; and
up to less than 3 mass% of additives; and
wherein the thickness of the second layer (40) is between 2.0 millimetres and 5.0 millimetres or between 2.5 millimetres and 4.0 millimetres.

5. The liquid-tight layer assembly of any one of claims 1 to 4, further comprising a plurality of electrical conductive strips (20) in planar contact with the first layer (30),
wherein the conductive strips (20) are disposed underneath the first layer (30); or
wherein the conductive strips (20) are embedded in the first layer (30); or wherein the conductive strips (20) are disposed between the first layer (30) and the second layer (40).

6. The liquid-tight layer assembly according to claim 5, wherein the electrical conductive strips (20) are formed of metal foil or of copper foil or of copper foil which is self-adhesive on one side.

7. The liquid-tight layer assembly according to claim 5 or 6, wherein the electrical conductive strips (20) form
a strip pattern with a strip spacing of less than 15 metres or of less than 10 metres or of less than 5 metres, or
a mesh with a mesh size of less than 15 metres or of less than 10 metres or of less than 5 metres or with a mesh spacing of 5 metres or of 10 metres.

8. The liquid-tight layer assembly according to claim 5, 6 or 7, wherein the electrical conductive strips (20) are grounded.

9. A method of building a liquid-tight layer assembly according to any one of claims 5 to 8, comprising the following steps:
providing a support layer (10);
adhering a mesh of electrical conductive strips (20) with a mesh size of less than 15 metres;
two-dimensionally applying a first layer (30) based on cement above the support layer and the adhered conductive strips, wherein a surface resistance of the first layer (30) according to DIN EN 61340-4-1 VDE 0300-4-1:2016-04 is less than or equal to 10⁵ Ω, and wherein the layer thickness of the first layer (30) is between 0.5 millimetres and 20 millimetres;
two-dimensionally applying a second layer (40) based on cement above the first layer, wherein a volume resistance of the second layer (40) according to DIN EN 61340-4-1 VDE 0300-4-1:2016-04 is greater than or equal to 10⁸ Ω, and a water impact class of the second layer (40) according to DIN 18534-1 - 2017-07 is W1-I to W3-I.

10. A method according to claim 9, further comprising:
grounding the electrical conductive strips (20).

## Revendications

1. Structure en couches étanche aux fluides pour surfaces de bâtiments, comprenant :
une première couche conductrice (30), et
une seconde couche non conductrice (40),
dans laquelle la première couche (30) est disposée à l'état installé entre une surface (10) à sceller et la seconde couche (40),
**caractérisée en ce que**
une résistance de surface de la première couche (30) selon DIN EN 61340-4-1 VDE 0300-4-1:2016-04 est inférieure ou égale à 10⁵ Ω ou inférieure ou égale à 5 × 10⁴ Ω, une résistance volumique de la seconde couche (40) selon DIN EN 61340-4-1 VDE 0300-4-1:2016-04 est supérieure ou égale à 10⁸ Ω ou
supérieure ou égale à 10⁹ Ω et dont la classe d'exposition à l'eau selon DIN 18534-1 - 2017-07 est de W1-I à W3-I, et aussi bien la première couche (30) que la seconde couche (40) sont réalisées à base de ciment.

2. Structure en couches étanche aux fluides selon la revendication 1, dans laquelle la première couche (30) comprend :
jusqu'à 50 % en poids de charges ;
jusqu'à 50 % en poids de ciment Portland ;
2,5 à 6 % en poids de poudre de graphite, de noir de carbone ou de poudre métallique ; et
jusqu'à 5 % en poids d'excipients.

3. Structure en couches étanche aux fluides selon la revendication 2, dans laquelle l'épaisseur de la première couche (30) est comprise
entre 0,5 et 20 millimètres ou
entre 1 et 5 millimètres ou
entre 1,5 et 2,5 millimètres.

4. Structure en couches étanche aux fluides selon l'une des revendications 1 à 3, dans laquelle la seconde couche (40) comprend :
10 % en poids à moins de 30 % en poids de charges organiques non réactives ; jusqu'à 10 % en poids de charges ;
5 % en poids jusqu'à moins de 50 % en poids de liants hydrauliques ;
jusqu'à moins de 55 % en poids de polymère d'acrylate ; et
jusqu'à moins de 3 % en poids d'excipients ; et
dans laquelle l'épaisseur de la seconde couche (40) est comprise entre 2,0 et
5,0 millimètres ou entre 2,5 et 4,0 millimètres.

5. Structure en couches étanche aux fluides selon l'une des revendications 1 à 4, comprenant en outre une pluralité de bandes électroconductrices (20) qui sont en contact plan avec la première couche (30),
dans laquelle les bandes conductrices (20) sont disposées sous la première couche (30) ; ou
dans laquelle les bandes conductrices (20) sont intégrées dans la première couche (30) ; ou
dans laquelle les bandes conductrices (20) sont disposées entre la première couche (30) et la seconde couche (40).

6. Structure en couches étanche aux fluides selon la revendication 5, dans laquelle les bandes électroconductrices (20) sont constituées d'une feuille métallique ou d'une feuille de cuivre ou d'une feuille de cuivre autocollante sur une face.

7. Structure en couches étanche aux fluides selon la revendication 5 ou 6, dans laquelle les bandes électroconductrices (20) forment
un motif de bandes comportant une distance entre les bandes inférieure à 15 mètres ou inférieure à 10 mètres ou inférieure à 5 mètres ou un filet comportant un maillage inférieur à 15 mètres ou inférieur à 10 mètres ou inférieur à 5 mètres ou comportant un maillage de 5 mètres ou comportant un maillage de 10 mètres.

8. Structure en couches étanche aux fluides selon la revendication 5, 6 ou 7, dans laquelle les bandes électroconductrices (20) sont mises à la terre.

9. Procédé de fabrication d'une structure en couches étanche aux fluides selon l'une des revendications 5 à 8, comprenant les étapes suivantes :
fourniture d'une couche de support (10) ;
collage sur un filet de bandes électroconductrices (20) comportant un maillage inférieur à 15 mètres ;
application en surface d'une première couche (30) à base de ciment sur la couche de support et les bandes conductrices collées, la résistance de surface de la première couche selon DIN EN 61340-4-1 VDE 0300-4-1:2016-04 étant inférieure ou égale à 10⁵ Ω, et l'épaisseur de couche de la première couche (30) étant comprise entre 0,5 et 20 millimètres ;
application en surface d'une seconde couche (40) à base de ciment sur la première couche, la résistance volumique selon DIN EN 61340-4-1 VDE 0300-4-1:2016-04 de la seconde couche (40) étant supérieure ou égale à 10⁸ Ω et la classe d'exposition à l'eau selon DIN 18534-1 - 2017-07 de la seconde couche étant de W1-I à W3-I.

10. Procédé selon la revendication 9, comprenant en outre :
la mise à la terre des bandes électroconductrices (20).
